# EUROPEAN PATENT APPLICATION

(11) **EP 1 216 911 A2**
(43) Date of publication of application: **26.06.2002**
(21) Application number: 01811178.1
(22) Date of filing: 04.12.2001
(51) Int. Cl.: B62D 1/04

(54) **Steering control for self-propelled vehicles**

(30) Priority: 20.12.2000 CH 24792000
(71) Applicant: APHRODITE AGENCIES LTD., St. Peter, Jersey JE37E, Channel Islands (GB)
(72) Inventor:
(74) Representative: Gaggini, Carlo, Dipl.Ing.

(57) **Abstract**

The present invention concerns a steering or piloting device for vehicles such as motorbikes, automobiles, etc., with a gripping zone (4) gripped by at least one hand of the driver.

According to the present invention the gripping zone (4) is provided with an elastically deformable geometry variable under the influence of the pressure exerted by the hand of the driver. Inside the gripping zone a switch and/or a sensor (7) is located, which reacts to the variations in the form and/or in the volume of the gripping zone (4) and in this manner activates a command and/or control device for the function of the vehicle. Such command and/or control devices can be e.g. the signal horn, the headlights, the gear change system, etc.

The inventive steering or piloting device can be installed on the handlebars of a motorcycle, on the steering wheel of an automobile, on the control column (joystick) of an aircraft, on the helm of a boat, etc.

## Description

The present invention concerns a control apparatus for self-propelled vehicles such as motorcycles, automobiles, aircraft, etc.

All these vehicles are equipped with a steering or piloting control device comprising a steering wheel as in automobiles, handlebars as on motorbikes, control columns (joystick) as in aircraft, a helm as in nautical vehicles, which for steering the vehicle is handled by at least one hand of the pilot (and in many cases by both hands) for effecting the steering or piloting operations.

In most of the known cases, and still in use presently, the gripping zone of the steering device serves exclusively for gripping said device and thus to subject it to a determined rotation or translation movement, which effects a change in the course of the vehicle. The other command and/or control devices of the vehicle normally consist of switches activated using separate push buttons or levers, which for operation require release of the hand from the gripping zone of the steering device. A classic case is the horn of an automobile arranged at the centre of the steering wheel, or of a motorcycle mounted on the handlebars on the left hand side outside the gripping handle. For sounding the horn the driver must move his hand or at least one finger from the gripping position on the steering device in order to press the corresponding button. Under normal driving conditions this does not present problems as the steering device, be it a steering wheel, handlebars or a control column, easily can be handled using one hand. Under special conditions, however, problems entailing quite serious consequences can arise, i.e. in emergency situations in which the reaction time for effecting a given operation can present a determining element in control of the situation.

It is to be remembered that at a speed of just 30 km/h a reaction time of 0.5 seconds, which is equal to the time span required for moving the hand from the steering wheel to the button, corresponds to a distance covered of 4.2 m already, whereas at a speed of 180 km/h it corresponds to a distance covered of about 25 m. This demonstrates to what degree the reaction time could be important in preventing the danger of collision.

In order to ameliorate the situation, and in particular for reducing the reaction time and avoiding the danger of rear-end collisions, a system has been proposed lately for automatically lighting the brake lights as soon as the gas pedal is released (the so-called ABL or Advanced Brake Light). Each time the driver takes his foot off the accelerator - under the influence of an emergency and thus at a speed exceeding 70% of the normal speed - the tail brake lights are lit, thus signalling automatically to the driver of the following car that the vehicle in front of him is in a decelerating phase and that very probably, after a fraction of a second, the breaking action will set in. This anticipation of the reaction gives the driver of the following vehicle a lead to react on his part, which often can be sufficient for avoiding the collision. This device, however, which has nothing in common, except for the objective, with the solution according to the present invention, reaches noticeable results similar to the ones that are obtained if the present invention is applied. The present invention thus concerns a different solution for the same problem.

Another type of danger arises in other particular driving conditions such as encountered if narrow curves are to be taken on a mountain road where the road is slippery or covered with snow. In such cases it is necessary that both hands can be kept on the steering wheel or on the handlebars for better coping with unforeseen driving conditions. From the patent literature some proposals aiming at resolving the above mentioned problems are already known.

From the Japanese Patent JP-08352122 a steering wheel is known, which can be handled using one hand only and which is provided with a switch. This solution obviously concerns industrial vehicles, which for taking narrow turns require more than one complete turn of the steering wheel. For preventing a release of the steering wheel, the later is equipped with a handle rotatable with respect to the steering wheel and fixed to the wheel ring. At the centre of the handle a button is provided for operating a horn. Application of a "rotating" button on the ring of a steering wheel can be useful on vehicles requiring a large number of turns of the steering wheel for taking narrow curves (which is the case in vehicles used in the building industry) but this solution cannot solve the problem described for vehicles travelling at high speed, in which the problem involves reaction times (to think e.g. of military aircraft or of automobiles driven at high speed) rather than concerning the ease of operating a given steering or piloting device.

From the PCT-WO00/34106 furthermore a vehicle steering wheel module is known the diameter of which can be regulated. This evidently concerns the field of vehicles of the future with a "technological" steering wheel, which can be detached from the vehicle and which carries with it all the command elements required for controlling the vehicle, including the on-board computer. The diameter of the steering wheel can be regulated using two "handles" permitting adaptation of the width at which the driver wants to place his hands. This steering wheel is of the fixed type as the direction of the course of the vehicle is regulated by the position of the handles, which can be moved sidewise to and fro. This proposal concerns, compared to what is known and used in practice, an entirely new concept, which must prove its merits in the future. For the time being the technology applied in automobiles as well as in motorcycles, aircraft and motorboats, is based on the concept of a steering wheel or a movable control column, i.e. rotatable, or moving in more directions respectively, and this is the field in which the present invention is situated.

The objective of the present invention is to propose a solution to the basic problem of safety of driving a self-propelled vehicle under extreme driving conditions, i.e. where the reaction time of the driver, in the order of milliseconds, can have a decisive role for the consequences of a critical situation.

In order to meet the desired objective, the inventive steering or piloting device presents the characteristics corresponding to the characterising part of the claim 1. Owing to these characteristics, which essentially provide that the driver of the vehicle, whatever type it may be, keeps at least one hand on a gripping zone of the steering or piloting device (steering wheel, handlebars, control column, helm, etc.), which presents an elastically variable geometry in such a manner that as the pressure acting on it exerted by the hand of the driver (i.e. gripping the steering device more forcefully) increases, the reaction of a switch and/or of a sensor incorporated in, or according to an alternative embodiment of the present invention applied later to, the gripping zone is activated, a maximum reaction speed is reached, which can be faster, as specific tests have proven, than the physiologic reaction speed, i.e. the one determined by the normal reaction phenomena of the senses to the conscientious state. Actually it is known today that the human reaction speed comprises an instinctive component owing to which body reaction is faster than could be expected from a reaction of the rational type: the later reaction being faster the smaller the obstacles impeding transmission between the sensorial stimulus received (visual, acoustic, etc.) and the organs that are to react. The main advantage of the present invention resides in the elimination of any movement of the hand away from the steering device for activating the steering or piloting and/or the control system of the vehicle.

The claims 2 through 12 concern preferential solutions according to the present invention, the advantages of which will be explained in the following with reference to their more detailed descriptions. It is to be noted already here that, in addition to the main advantage cited above of the speed and ease of the reaction particularly under special stress situations of the driver, the present invention offers an additional advantage of general character, namely that the gripping zone of the steering or piloting device, internally contains the electric switch and/or a sensor (which can be not only electric, but also pneumatic or hydraulic), which results in an arrangement entirely isolated against external influences, in particular against atmospheric influences. This is particularly advantageous for application on motorcycles, which are exposed to the influences of atmospheric conditions. Thus this advantage can be useful in general as protection against dust and contamination of the contacting elements is an advantage, which always makes itself felt and improves the reliability of the device considered.

The present invention is described in the following with reference to design examples illustrated in the corresponding drawings. It is shown in the:
- Fig. 1: a first design example of the present invention applied to the handlebars of a motorcycle, shown in its inactive state;
- Fig. 2: the inventive device according to the Fig. 1 activated pressure being applied by the hand, or by a finger respectively, of the driver;
- Fig. 3: another solution adapted, in the sense of an example, to the handlebars of a motorcycle, in which arrangement the gripping zone of the steering device is formed by a body of elastically variable geometry mounted onto a pre-existing rigid structure;
- Fig. 4: an alternative design example of the present invention, again applied, in the sense of a example, to the handlebars of a motorcycle, in which arrangement the sensor reacting to changes in the form and/or the volume of the gripping zone, is a hydraulic or a pneumatic sensor;
- Fig. 5: a variant of the solution shown in the Fig. 4, in which furthermore the variations in the form and/or the volume of the gripping zone are transmitted to a pneumatic, or hydraulic, valve;
- Fig. 6: another variant of the present invention, in which the steering or piloting device is the steering wheel of an automobile the gripping zone preferentially being incorporated in a lateral zone of said steering wheel.

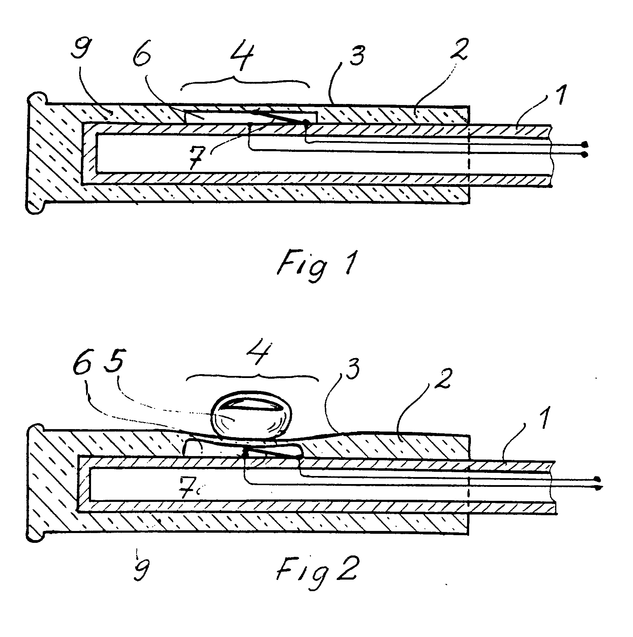

In the Figures 1 and 2, which show the present invention in one of its simplest applications, which also is most interesting from the point of view of the advantages that can be realised, i.e. on the handlebars of a motorcycle, the tube of the handlebar, indicated with the reference number 1, is made from steel or another rigid material. On the handlebar 1 a handle 2 is mounted, not rotatable with respect to the tube 1 but made from an elastically deformable material, which can be e.g. a foamed polyurethane preferably contained in an outer tubular cover 3, forming kind of a skin presenting good abrasion resistance properties.

In the example shown thus a "fixed" handle of the handlebar of a motorcycle is concerned, i.e. not one of the type rotatably mounted onto the support tube 1 normally serving for regulating the gasoline (petrol) supply to the motor. It is to be stressed here that the solution shown here, with the changes required and accepting the respective complications, can be adapted also to a handle rotatably mounted on the tube 1. Furthermore it is to be clarified that the presence of an outer tubular cover 3 (indicated in the Figures 1 and 2 as an outer skin of the handle) is not indispensable for realising the present invention, insofar as, under the condition that the material of which the handle 2 is made presents the required wear resistance properties as well as elasticity and impermeability, it can replace the outer surface of the handle 2.

The gripping zone 4, i.e. the zone which plays a fundamental role in the present invention and which is provided with an elastically variable geometry in such a manner that as the pressure exerted by the hand of the driver increases - which is indicated symbolically in the Fig. 2 by the pressing finger 5 - its form and/or its volume changes. In the case shown in the Figures 1 and 2 the gripping zone is laid out as a concave zone i.e. forming a recess 6, which can be pressingly gripped from the outside, as can be seen in the Fig. 2, e.g. using the pressing finger 5. It is to be made clear that the manner in which the gripping zone 4 is activated using a finger 5 is described here merely in the sense of an example, as evidently any other type of gripping action exerted by the hand of the driver (using more fingers or e.g. the entire palm of the hand, etc.) is included within the scope of the application of the present invention. Also the radial extent of the gripping zone 4 formed as a recess 6 does not play a determining role for the effects of the present invention, as it is sufficient that the zone itself be large enough to contain, as on the other hand is necessary for realising the inventive concept, an electric switch and/or a sensor 7, which reacts to variations in form and/or volume of the gripping zone 4.

In the Figures 1 and 2 a switch 7 is shown, in the sense of a mere example, presenting two contacts, which as shown in the Fig. 1 are open whereas in the Fig. 2 they are shown in their closed state owing to the pressure exerted by the finger 5 onto the gripping zone 4. In the sense of the present invention the type of the arrangement applied for reacting to the variations in form and/or volume of the gripping zone 4 does not play any particular role. It is sufficient if the system is reliable and apt to detect the occurrence of variations of the values cited of the gripping zone. In the course of the following description of further variant embodiments of the present invention some preferred types of switches and/or sensors to be applied within the scope of the present invention will be specified more precisely. In the Figures 1 and 2 a switch 7 is shown comprising two contacting points, which are closed as the gripping zone 4 is pressed by the finger 5. Closing of the contact of the switch 7 causes activation of a command and/or control device for the function of the vehicle (not shown), which according to a first embodiment of the present invention can be the signal horn of the vehicle, which thus attracts the attention of bystanders. It also can be provided that the command and/or control device to be activated be a horn coupled with the headlights of the vehicle in such a manner that the alarm signal emitted be more effective as now it is an acoustic signal combined with an optical signal more easily perceived by bystanders.

According to a further preferred embodiment of the present invention it is provided that the commanding and/or controlling device of the vehicle, which actually is not indicated in the Figures, be the sequential gear change system.

The advantage of this solution is evident: It allows the driver to realise all the operations of changing the speed and/or the course direction of the vehicle without being forced to take his hands off the steering wheel, which evidently greatly contributes to an increase in driving safety of the vehicle.

According to a further preferred embodiment of the present invention, which is not shown in the Figures but which easy to understand, it is proposed that the commanding and/or controlling device be the emergency lights of the vehicle. In this case, as the pressure exerted by the hand 5 of the driver increases, or is maintained over a time period longer than a predetermined time span, of e.g. 10 seconds, automatically the emergency lights (usually intermittent red or amber lights arranged on all four sides of the vehicle) of the vehicle are lit, which primarily serves for signalling to the following vehicles the presence of an obstacle in the way, which can be e.g. a column at a standstill or creeping at reduced speed. Rapid signalling of the obstacle by fast activation of the emergency lights can drastically reduce the danger of rear-end collisions and thus constitutes an optimum solution of one of the most serious problems of road traffic safety.

Evidently the command and/or control device in principle can concern the most diverse types of vehicles.

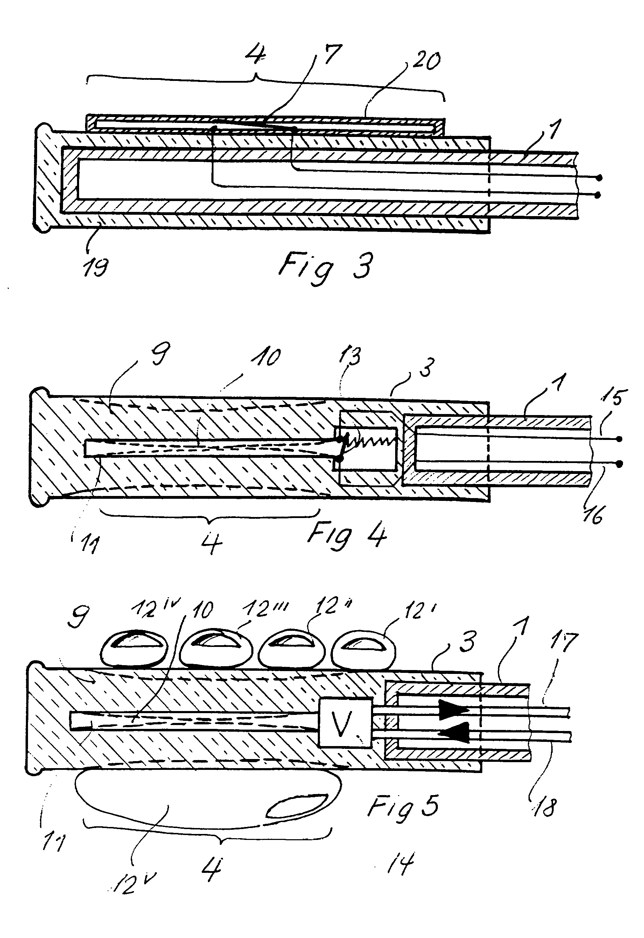

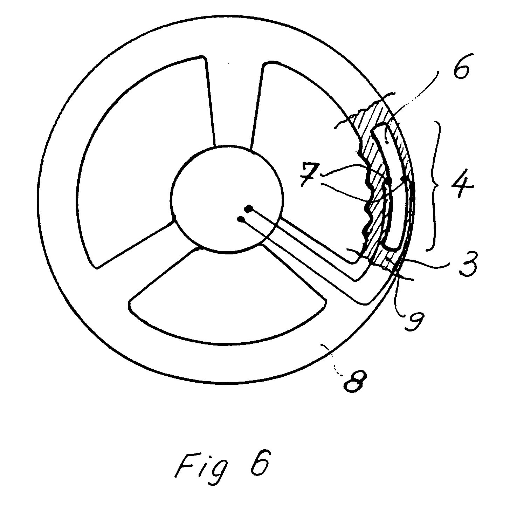

As a preferred example of a steering device already the handlebars of a motorcycle have been cited. This preferred form of realisation of the present invention was chosen also for illustrating several preferred forms of the inventive gripping zone, which will be described in the following with reference to the Figures 3 through 5. It is to be clarified already here, that also these preferred embodiments of the present invention are shown applied to handlebars of a motorcycle represent merely in the sense of examples as also these solutions could be adapted without difficulties to other types of steering or piloting devices, and most commonly could be applied to e.g. a steering wheel of an automobile (shown in the Fig. 6), the control column of an aircraft or the helm of a nautical vehicle.

In the most interesting application of the present invention, together with the one on a motorcycle, i.e. in the case of the steering wheel 8 of an automobile (compare the Fig. 6), it can be proposed that the gripping zone 4 be incorporated preferentially in a lateral zone at the right or the left of the steering wheel. The advantage of this arrangement is evident: these are the positions on the wheel on which the driver preferentially keeps his hands.

In the Fig. 6 a steering wheel 8 is shown in purely schematic manner, within the right hand side of which the elastically deformable gripping zone 4 is incorporated containing a hollow chamber 6 provided with the two contacting points of a switch which are closed as the gripping zone 4 is pressed by the hand of the driver. Obviously the cavity 6 for better clarity is shown exaggerated in size and especially in width over the actual dimensions. In reality the width of the zone along the circumference of the wheel and the height of the gap containing the switch 7 will be chosen in such a manner that the driver can react within the shortest possible time and with the maximum functional reliability. Determination of the dimensions and the elasticity characteristics to be chosen for the gripping zone, which decisively influence the reliability properties of the inventive arrangement, is left to the specialist in the field, who can determine the right parameters based on suitable tests.

According to a preferred embodiment of the present invention, shown in almost all of the Figures, it is provided that the gripping zone 4 consist of a tubular deformable external cover 3 filled with an elastically deformable material 9 such as a foamed polyurethane, inside which the electric switch and/or the sensor 7 are located. According to this preferred embodiment of the present invention provided in the examples shown in the Figures 1, 2, 4, 5 and 6 the good elasticity properties of elastomer materials are made use of, from which commanding devices for vehicles can be made, which correspond to the requirements for the layout according to the present invention and are cost-efficient and reliable.

According to a further preferred form of the present invention, not illustrated as it is intuitively understood, the electric switch 7 is a piezoelectric switch reacting to an increase in pressure in the gripping zone 4 caused by the variation in form and/or the volume of the gripping zone 4. This embodiment does not require any cavity in the gripping zone as it is sufficient that the piezoelectric switch be immersed in the elastic mass forming the zone itself. Piezoelectric switches of this type are known today in many fields of technical applications and thus a more detailed description can be dispensed with here as any specialist in the field is able to select the correct type.

According to a further preferred embodiment of the present invention, shown in the Figures 4 and 5, the electric switch and/or the sensor 7 are a pneumatic sensor, or a hydraulic sensor 10 respectively, comprising a chamber 11 containing the fluid, located in the gripping zone 4. The variations in the form and/or the volume of the gripping zone 4, caused e.g. as shown in the sense of a mere example in the Fig. 5 by pressing the gripping zone 4 with the five fingers of the hand 12' through 12^{V}, are transmitted to the fluid contained in the chamber 11, which fluid in turn transmits them to a valve 12 which can be a pneumatic valve as well as the butterfly valve 13 represented in the example shown in the Fig. 4, or a hydraulic valve 14 as shown, again in the sense of a mere example, in the Fig. 5. The valve 13, or 14 respectively, thus represents the connection to at least one command and/or control device (not shown) for the functions of the vehicle. In the case shown in the Fig. 4 schematically representing the pneumatic valve 13, which can be formed as part of an electric switch apt to interrupt an electric circuit, which is indicated by the two connecting lines 15 and 16, whereas in the case of the hydraulic valve 14 according to the example shown in the Fig. 5 can be connected using two tubes 17 and 18 in which the fluid moves activating the command and/or control circuit of the vehicle. It is understood that the fluid circulating in the tubes 17 and 18 can be a liquid as well as a gas, e.g. air, where the concept of a hydraulic valve 14 is explained in a more general sense of a valve inserted in a circuit in which a fluid circulates.

According to a further embodiment of the present invention, which can be applied also later on to steering or piloting devices of self-propelled vehicles, not yet equipped with the inventive devices. This can be very useful in upgrading vehicles already in use on the roads or in the skies to more modern safety standards, which require maximum reaction speed in emergency situations, as offered by the devices according to the present invention.

In that case, as shown in the sense of a mere example in the Fig. 3 for the case of a motorcycle handlebar, the gripping zone 4 is provided with an elastically variable geometry, which in a subsequent installation is mounted on a pre-existing rigid structure, e.g. by installing on the rigid handle 19, donned onto the tube 1, a body 20 presenting the characteristics of elastically deformable geometry and containing inside it the electric switch and/or the sensor 7, which reacts to the variations in the form and/or the volume of the gripping zone 4, or of the body 20 respectively, which is mounted later onto the gripping zone 4.

The advantages of this solution are evident: the objectives of the present invention can be met in simple and cost-efficient manner, also in the countless cases, in which its application had not been planned and of course in all vehicles already in circulation.

The advantage obtainable using the present invention shown and described with reference to several but by no means not exhausting examples of the general concept of the present invention is seen in that the reaction time of the driver of a vehicle in case of emergency situations is reduced, which is accomplished using a simple and low cost arrangement ensuring great reliability. Furthermore application of the inventive steering or piloting device, aiming at commanding as well as control functions, can contribute to render the command operations easy and certainly safer in any case than on vehicles presently in use, which force the driver to release the steering wheel, as it happens frequently, if e.g. a change of speed is to be effected.

The objective of the present invention thus is to enhance the safety of driving vehicles and thus to reduce accidents caused by them.

### List of the Elements Referred to in the Figures

- 1.: Tube
- 2.: Handle
- 3.: Tubular outer cover
- 4.: Gripping zone
- 5.: Pressing finger
- 6.: Cavity
- 7.: Switch and/or sensor
- 8.: Steering wheel of an automobile
- 9.: Elastically deformable material
- 10.: Pneumatic sensor, or hydraulic sensor respectively
- 11.: Chamber
- 12.: Valve
- 13.: Butterfly valve
- 14.: Pneumatic valve
- 15.: Connecting line
- 16.: Connecting line
- 17.: Tube
- 18.: Tube
- 19.: Rigid handle
- 20.: Body

## Claims

1. steering or piloting device for self-propelled vehicles such as motorcycles, automobiles, etc., with a gripping zone, which for steering is gripped with at least one hand and is moved by rotation and/or translation,
**characterized in that**
the gripping zone (4) is provided with an elastically deformable geometry in such a manner that, as the pressure exerted by the hand (5) of the driver onto it, its form and/or its volume change,
inside the gripping zone (4) an electric switch and/or a sensor (7) is located, which reacts to the changes in form and/or the volume of the gripping zone (4) and that furthermore the electric switch and/or the sensor (7) is connected to at least one command and/or control device of the function of the vehicle, which device thus is activated by the reaction of the electric switch and/or the sensor.

2. steering or piloting device according to the claim 1,
**characterized in that**
the steering or piloting device is the steering wheel (8) of an automobile and the gripping zone (4) is incorporated in a preferably lateral zone at the right and/or the left hand side of the wheel.

3. steering or piloting device according to the claim 1,
**characterized in that**
the steering or piloting device is a handle (2) of the handlebars of a motorcycle.

4. steering or piloting device according to the claim 1,
**characterized in that**
the steering or piloting device is a handle (2) of the control column or joystick of an aircraft.

5. steering or piloting device according to one of the claims 1 through 4,
**characterized in that**
the gripping zone (4) is formed by a deformable tubular outer cover (3) filled with an elastically deformable material (9) such as a foamed polyurethane, inside which the electric switch and/or the sensor (7) is contained.

6. steering or piloting device according to one of the claims 1 through 4,
**characterized in that**
the electric switch (7) is a switch in which contacts are closed owing to an increase in pressure in the gripping zone (4) caused by the variation in the form and/or the volume of the gripping zone (4).

7. steering or piloting device according to one of the claims 1 through 4,
**characterized in that**
the electric switch (7) is a piezoelectric switch, which reacts to an increase in pressure in the gripping zone (4) caused by the variation in the form and/or the volume of the gripping zone (4).

8. steering or piloting device according to one of the claims 1 through 4,
**characterized in that**
the electric switch and/or the sensor (7) is a pneumatic sensor, or a hydraulic sensor (10), comprising a chamber (11) located inside the gripping zone (4), containing the fluid, in such a manner that the variations in the form and/or the volume of the gripping zone (4) are transmitted to the fluid, which in turn transmits them to a pneumatic valve (13), or a hydraulic valve (14) respectively, which provides the connection to at least one command and/or control device of the functions of the vehicle.

9. steering or piloting device according to one of the claims 1 through 8,
**characterized in that**
the command and/or control device of the vehicle is its signal horn.

10. steering or piloting device according to the claim 9,
**characterized in that**
the signal horn is coupled to the controls of the headlights in such a manner that if the horn is honking upon command by the command device also the headlights are turned on.

11. steering or piloting device according to one of the claims 1 through 8,
**characterized in that**
the command and/or control device of the vehicle comprises its emergency lights.

12. steering or piloting device according to one of the claims 1 through 8,
**characterized in that**
the command and/or control device of the vehicle is its gear change system.

13. steering or piloting device according to the claim 1,
**characterized in that**
the gripping zone (4) is provided with an elastically deformable geometry mounted in a later installation on a pre-existing rigid structure (19), comprising a body (20) presenting the desired characteristics of a variable elastic geometry and containing in its inside the electric switch and/or the sensor (7), which reacts to variations in the form and/or the in the volume of the gripping zone (4), or of the body (20) applied later.
